# EUROPEAN PATENT SPECIFICATION

(11) **EP 3 298 336 B1**
(45) Date of publication and mention of the grant of the patent: **22.05.2019**
(21) Application number: 16739545.8
(22) Date of filing: 23.05.2016
(51) Int. Cl.: F27B 9/02, F27B 9/04, F27D 17/00, F27D 99/00, F27B 9/12

(54) **FIRING KILN FOR CERAMIC PRODUCTS, AND THE LIKE**
BRENNOFEN FÜR KERAMIKPRODUKTE UND DERGLEICHEN
FOUR DE CUISSON POUR PRODUITS CÉRAMIQUES, ET SIMILAIRES

(30) Priority: 22.05.2015 IT UB20150857
(43) Date of publication of application: 28.03.2018
(73) Proprietor: Siti - B&T Group S.p.A., 41043 Formigine (Modena) (IT)
(72) Inventor: CANTARELLI, Lanfranco, 41043 Formigine (Modena) (IT)
(74) Representative: Feltrinelli, Secondo Andrea
(86) International application number: PCT/IB2016/053016
(87) International publication number: WO 2016/189453

(56) References cited:
- EP-A1- 2 687 801
- DE-A1-102009 019 573
- US-A1- 2004 164 928
- US-A1- 2015 118 632

## Description

### TECHNICAL FIELD OF THE INVENTION

The present invention relates to a roller firing kiln for ceramic products, and the like.

In particular the present invention relates to a motorized roller firing kiln divided into two superimposed parts that allow obtaining, in a simplified manner, the recovery of the heat from the cooling zone to the heating zone, with a high reduction of the energy consumptions and consequent advantages in terms of environmental impact - in addition to allowing a considerable electrical savings obtained due to the presence of a zone, dedicated to the cooling, that is considerably enlarged with respect to that present in a conventional firing kiln for ceramic products and the like.

### STATE OF THE PRIOR ART

In the field of production of ceramic products and the like, it is known to use firing kilns of various type which in the case of single-layer kilns can be horizontally extended even for hundreds of meters; within the kiln, a channel is defined for feeding the products to be fired, such as plates, crockery, sanitary fixtures, bricks and the like.

The channel is normally delimited by a lower wall or bottom, by two lateral walls and by an upper wall or vault.

The walls are made of or covered internally by heat-resistant refractory material.

The products to be fired are supplied to an inlet of the channel and move forward to a respective outlet on transport means, such as of motorized roller type, made of suitable material resistant to high temperatures, generally ceramic material.

The mouths of burners internally open on the lateral walls of the kiln; such mouths are suitably distributed so as to make different temperature areas along the channel and in a manner such to allow the firing of said products moving therein.

The making of the ceramic products within the kiln occurs through an initial step of heating and a subsequent step of cooling.

In particular, the heating step occurs in a first preheating area for the products supplied to the inlet of the channel and in a second intermediate firing area for the products themselves at higher temperature; the cooling step takes place in a third area that terminates at the outlet of the channel.

The areas are generally constituted by modules, the number of which varying according to the function carried out by the area in question.

In order to meet the present needs of having increasingly large productions and increasingly fast work cycles, the current kilns on the market have considerable bulk and a greater number of modules dedicated to the heating step with respect to that of the modules dedicated to the cooling step. Consequently, the cooling step must be carried out in a forced manner by means of the use of large, complex blowing and suction apparatuses, by employing considerable electrical power and having a high cost from the consumption standpoint. US 2004/0164928 A1 discloses a method and a relative firing device for firing plasma display panels, wherein the firing device comprises an upper channel, a lower channel and elevator means between the upper channel and the lower channel. The upper channel comprises a slow cooling area afterwards a firing area for allowing a slow cooling of the fired products.

DE 102009019573 A1 discloses a furnace for firing metal workpieces comprising an upper channel, a lower channel and elevator means between such channels, wherein both the upper channel and the lower channel are configured to fire the metal workpieces.

The current needs in the field of the ceramic industry therefore provide for a reduction of the size of the kilns, without causing a decrease of the production of an increase of the electrical power used for executing the cooling step.

In the design of the kilns, another important aspect is that of energy consumption, both from the economical standpoint due to the high cost of the fuel used for the power supply of the burners, and from the environmental standpoint for the emission of greenhouse gas such as carbon dioxide.

Therefore, the more recent kilns of known type have technical expedients which allow the recovery of hot air to be sent to the burners as combustion air for the purpose of reducing fuel consumption.

Nevertheless, the energy savings obtained with the kilns of known type provide for complex and bulky pipes and there is still room for improving their efficiency.

### OBJECTS OF THE INVENTION

The main object of the present invention is to arrange the creation of a firing kiln for ceramic products and the like that allows making an improvement to the state of the art. In the scope of such object, the task is to provide a firing kiln for ceramic products and the like that allows maximizing the exploitation of the spaces used and reducing the energy consumption, especially with regard to electrical power consumption.

In addition, a further task of the present invention is to make a firing kiln for ceramic products and the like that is simple and quick to use and maintain.

This task and this object are attained by the firing kiln for ceramic products and the like according to the enclosed claim 1.

The firing kiln according to the present invention is of the type comprising at least two superimposed channels, wherein one of the two channels is dedicated to the heating zone and to the direct cooling area of the ceramic products and the other channel to the slow/final cooling area, delimited between walls of the kiln itself; it also comprises respective first feeding members for feeding products into at least the upper channel and second feeding members for feeding the products into at least the second lower channel, and it comprises burners in the channel part dedicated to the heating step; the kiln comprises lifting means, at the end of the channel comprising the heating zone, which allow transferring the products themselves from the said channel comprising the heating zone to said channel dedicated to the slow/final cooling area, and comprises means for exchanging and conveying the hot air from the slow/final cooling area to the heating zone, for the recovery of hot air between areas at different temperature, so as to allow reducing energy consumptions and environmental impact.

Further advantageous characteristics are described in the dependent claims.

### BRIEF DESCRIPTION OF THE DRAWINGS.

The characteristics of the invention will more comprehensible to the man skilled in the art due to the following description and enclosed drawing tables, given as a non-limiting example, in which:
figure 1 is a schematic side view of the operation of the firing kiln for ceramic products, and the like, according to the present invention;

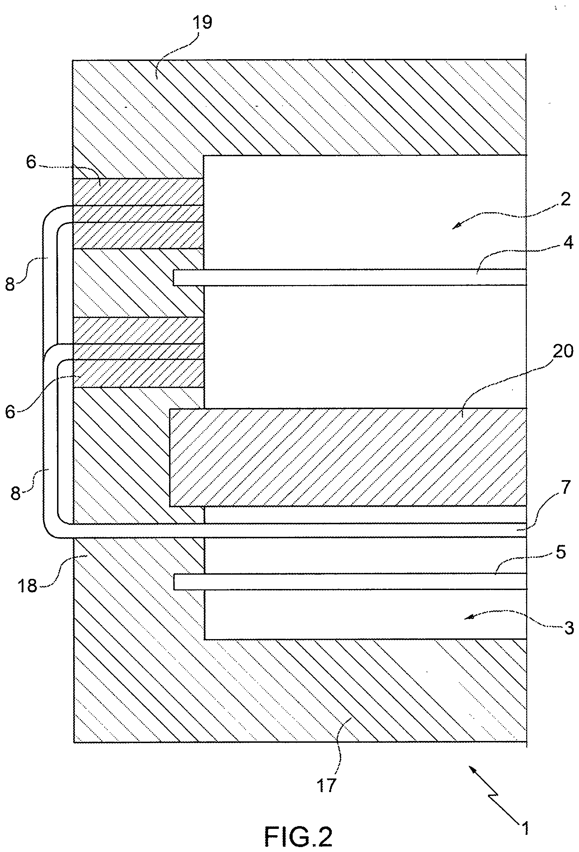

figure 2 is a cross section II-II with respect to figure 1 of the kiln, with means underlined for exchanging and conveying the hot air from the lower channel containing the slow/final cooling area to the heating zone of the upper channel, associated with the firing kiln for ceramic products and the like, according to the present invention;

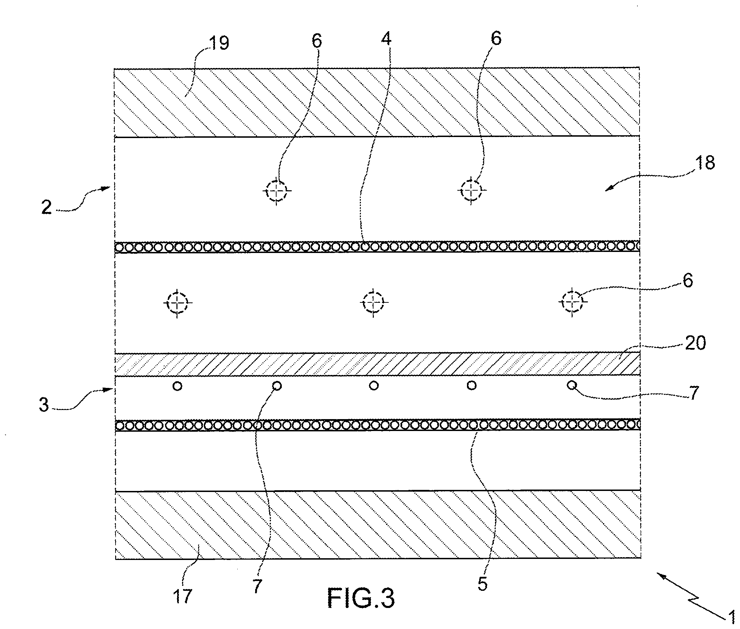

figure 3 is a longitudinal section of a portion of the firing kiln for ceramic products and the like, according to the present invention.
figure 4 is a detail of the final section of the channel comprising the step of heating the firing kiln for ceramic products and the like, according to the present invention.

### EMBODIMENTS OF THE INVENTION.

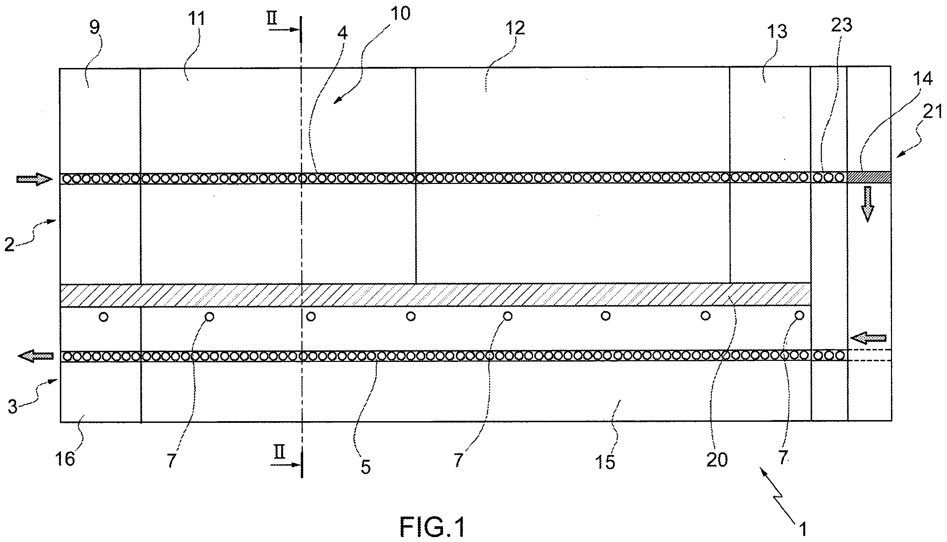

With reference to the enclosed figure 1, reference number 1 overall indicates a firing kiln for ceramic products, and the like, according to the present invention.

The firing kiln 1 for ceramic products, and the like, is of the type comprising at least one first upper channel 2 and at least one second lower channel 3 defined between walls of the kiln 1 itself, also comprises respective first feeding members 4 for feeding said products into at least the first upper channel 2 and second feeding members 5 for feeding said products into at least the second lower channel 3, and comprises respective burners 6; the kiln 1 comprises means 7 for exchanging and means 8 for conveying the hot air from the lower channel 3 to the upper channel 2, for the recovery of hot air between different temperature zones so as to allow reducing energy consumptions and environmental impact.

The first upper channel 2 comprises at least one first inlet 9 for the supply of said products.

In addition, the first channel 2 comprises at least one heating zone 10, constituted by a preheating area 11 for preheating the products themselves and an intermediate area 12 for the actual firing, followed by at least one direct cooling area 13, and terminates with the presence of lifting means 14, which allow transferring said products from the upper channel 2 to the lower channel 3. More in detail, direct cooling area 13 comprises a set of perforated pipes which allow cooling the ceramic products present in said direct cooling area 13, through jets of cold air exiting at high speed from said perforated pipes, and allow a considerable cooling of the temperature of the products themselves. For example, the temperature of said ceramic products can be lowered to a value equal to about 650 °C.

The second lower channel 3 comprises at least one slow/final cooling area 15 for said products and an outlet 16 for the products themselves. The slow/final cooling area 15 thus obtained has length equal to that characterizing the upper channel 2, hence clearly greater than the length characterizing the cooling area of a firing kiln for ceramic products of known type, and is such to allow a natural cooling, without requiring complex and bulky blowing and suction means, as instead occurs for the kilns of known type.

More in detail, in another version of the kiln 1, the upper channel 2 can contain the slow/final cooling area for said products and the lower channel 3 contain the heating zone and the direct cooling area; in such case, all the means collaborating for and with the two channels would be positioned at the channel where they are associated, and the lifting means 14 would allow a lifting of said products from the lower channel 3 to the upper channel 2. Such version is not represented in the figures.

In particular, the abovementioned exchange means 7 facilitate the heat exchange with the hot air of the lower channel 3, in which the process of slow/final cooling of said products occurs, and the abovementioned conveying means 8 are adapted to convey the hot air from the exchange means 7 to the burners 6 associated with the upper channel 2. More in detail, the first upper channel 2 and the second lower channel 3 are superimposed and defined between a lower wall or bottom 17, at least one lateral wall 18 and in particular between lateral walls 18, an upper wall or vault 19, and at least one intermediate partition vault 20.

The mouths of burners 6 internally open on the lateral walls 18; such mouths are suitably distributed so as to attain the aforesaid different temperature areas along the first upper channel 2 and so as to allow the suitable firing of said products.

In particular, the intermediate vault 20 has the ends suitably associated with respective opposite housings of the lateral walls 18; the intermediate vault 20 can be multilayer with elements made of refractory material, also insulating, of various type.

The inlet 9 of the first upper channel 2 and the outlet 16 of the second lower channel 3 are arranged on the same side of the kiln, and the aforesaid respective first feeding members 4 and second feeding members 5 are adapted to convey said products along the first upper channel 2 in a direction opposite that of said products conveyed along the second lower channel 3.

The first feeding members 4 and the second feeding members 5 are rollers, made of material that is resistant to high temperatures.

All the walls of the kiln 1 are made of or covered in heat-resistant refractory materials.

The first upper channel 2 and the second lower channel 3 are superimposed with the preheating area 11, the firing area 12 and the direct cooling area 13 situated on the upper part at the slow/final cooling area 15 of the lower channel 3.

In particular, the exchange means 7 are present at the top of the second lower channel 3 and comprise closed pipes in which cold air passes that is blown into the pipes themselves by ventilation means, so as to cause the heat exchange between the cold air contained in the exchange means 7 and the hot air present in the lower channel 3.

Specifically, said ventilation means have two functions. The first function is that of blowing cold air into said exchange means 7, in a manner such to allow the cooling, via heat exchange, of said products present in the slow/final cooling area 15 of the lower channel 3. The second function is that of giving the necessary supply of comburent air to the burners 6 associated with the upper channel 2, so as to allow the execution of the combustion in said burners 6, without having to have specific means adapted to provide comburent air to the burners 6.

More in detail, the air flow passing into the exchange means 7 is adjusted through the automatic valves that adjust the level of cooling of the lower channel 3; the transport of the hot air by the exchange means 7 to the burners 6 occurs through said conveying means 8.

Said products are supplied to the inlet 9, and by means of the rollers of the first feeding members 4 they are transported to the end of the upper channel 2, where said lifting means 14 are present allowing the descent of said products to the second lower channel 3, in which by means of the rollers of the second feeding members 5 they arrive at the outlet 16.

More in detail, the lifting means 14 are contained in a closed box 21 which allows the loading and descending of the products themselves from the first upper channel 2 to the second lower channel 3. In addition, said closed box 21 is suitably insulated, hence allowing the maintenance of the temperature of the entire zone of the lift at a value close to that characterizing said products present in the direct cooling zone 13, so as to prevent the dispersion of the heat exploited in the slow/final cooling area 15 for the execution of the heat exchange with the cold air contained in the exchange means 7.

In addition, said firing kiln 1 comprises roller unloading means 22 through which said ceramic products can be unloaded outside said kiln in case of emergency, and it comprises at least two roller conveyor sections 23.

The first of said at least two roller conveyor sections 23 is placed in the upper channel 2, and achieves the acceleration of the products from the direct cooling area 13 towards the lifting means 14 in which the descent of the products occurs.

The second of said at least two roller conveyor sections 23 is situated in the lower channel 3 and achieves the acceleration of the ceramic products, reached in the lower channel 3 by means of the lifting means 14, from the closed box 21 towards the slow/final cooling area 15.

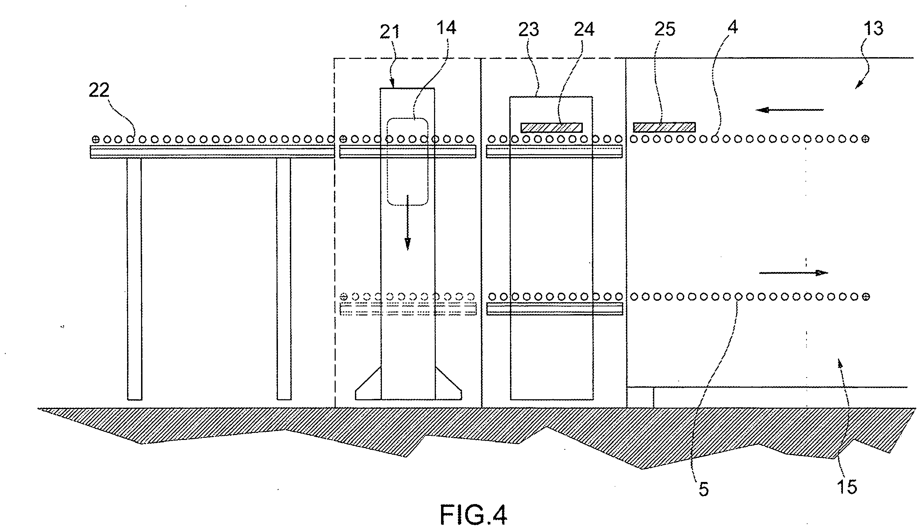

More in detail, in figure 4, the ceramic products are illustrated as a first row 24 and a second row 25, in which in each row, one or more ceramic products are arranged widthwise next to each other.

The two roller conveyor sections 23 attain the acceleration of the first row 24 of the products exiting from the upper channel 2 and hence the spacing from the subsequent row 25 of products.

The lifting means 14 thus have the time to carry out the descent of the first row 24 of ceramic products towards the lower channel and the products can reach the slow/final cooling area 15.

The lifting means 14 also have the time to return or re-ascend into the initial position at the feeding members 4 of the upper channel 2, thus allowing the loading, the descent and the feeding to the slow/final cooling area 15 of the subsequent row 25 of products themselves.

In addition, said at least two roller conveyor sections 23 have a length functional for the purpose of reducing the time of feeding said first row 24 of products towards the lifting means 14 and the time necessary for unloading said products from the closed box 21 to the slow/final cooling area 15 of the lower channel 3, preventing the interruption of the feeding of the subsequent row 25 of products themselves.

By way of a non-limiting example, the length of each of the at least two roller conveyor sections 23 can be considered equal to about a meter and a half, so as to allow reaching the best compromise between the quantity of products for which the descent must be executed from the upper channel 2 to the lower channel 3 and the excessive bulks which would be encountered in the presence of said at least two roller conveyor sections 23 with high length, and each of the two roller conveyor sections 23 has a transfer speed of the ceramic products equal to about eight times the transfer speed of the feeding members (4, 5).

In particular, the lifting means 14 provide for the presence of roller unloading means 22 for emergencies, usable in case of failure of the lifting means 14 for unloading said products.

In order to better comprehend the invention, an embodiment of the present invention is reported hereinbelow.

A firing kiln for ceramic products of known type has a number of modules dedicated to the heating step equal to about 60% of the total length of the kiln and a number of modules dedicated to the cooling step equal to about 40%.

The firing kiln 1 according to the present invention has a number of cooling modules greater than that of the heating modules.

The firing kiln 1 comprises an upper channel with the preheating area 11, the firing area 12 and the direct cooling area 13 and a lower channel 3 entirely dedicated to the slow/final cooling area 15.

The arrangement of the firing kiln 1 according to the present invention allows an increase of the production greater than 40% with respect to a kiln of known type of the same length.

In addition, the firing kiln 1 according to the present invention does not require having complex and bulky blowing and suction means due to the fact that it has the lower channel 3 entirely dedicated for the entire length thereof to the slow/final cooling area 15 for the products themselves.

In this manner, the firing kiln 1 also has a reduction of the electric power necessary for the blowing and suction means greater than about 40% with respect to the electrical power that is necessary for the kilns of known type.

The invention thus conceived allows obtaining considerable technical advantages.

An important technical advantage is constituted by the fact that the firing kiln 1 according to the present invention allows maintaining high production levels, maximizing the spaces, due to the presence of two superimposed channels, of which a first channel 2 is dedicated to the heating zone and to the direct cooling area and a second channel 3 is dedicated for the entire length thereof to the slow/final cooling area. According to one version of the present invention, the first channel 2 is situated in upper position and the second channel 3 is situated in lower position, nevertheless according to another version of the present invention the position of the channel 2 and of the channel 3 can be switched, with the first channel 2 in lower position and the second channel 3 in upper position.

In addition, another advantage is related to the fact that the firing kiln 1 according to the present invention, having a second lower channel 3 dedicated for the entire length thereof to the slow/final cooling, allows a natural cooling of the ceramic products themselves based on the heat exchange between the cold air blown within the exchange means 7 by the ventilation means and the hot air of the environment present in the lower cooling channel 3.

Hence, a considerable electrical savings is also obtained, and consequently a considerable lowering of the costs and energy consumptions with respect to the kilns of known type, which instead comprise complex suction and blowing means necessary for the cooling of the products themselves.

Finally, the firing kiln 1 according to the present invention allows reducing the energy consumption and the emissions due to the presence of conveying means 8 which transport the hot air present in the exchange means 7 after the heat exchange has occurred, allowing a subsequent use thereof as combustion air for the burners 6 associated with the upper channel 2, with advantages also from an environmental standpoint.

It is thus seen that the invention attains the pre-established objects.

The present invention has been described according to preferred embodiments of the invention, but equivalent variants can be conceived without departing from the protective scope offered by the following claims.

## Claims

1. Firing kiln (1) for ceramic products and the like comprising at least a first heating zone (10) of the ceramic products, at least one direct cooling area (13) and at least one slow/final cooling area (15), defined between the walls of the kiln itself (1), product feeding members (4, 5), and burners (6) for the firing of the products themselves, **characterised in that** it comprises a first channel (2) and a second channel (3) superimposed to each other, wherein said heating zone (10) and said direct cooling area (13) are comprised in a channel and said slow/final cooling area (15) is comprised in the other channel, and lifting means (14) that allow for the transfer of the ceramic products from the channel comprising the heating zone (10) and the direct cooling area (13) to the channel comprising the slow/final cooling area (15), wherein said direct cooling area (13) comprises a set of perforated pipes which allow cooling the ceramic products present in said direct cooling area (13) through jets of cold air exiting at high speed from said perforated pipes, and allow a considerable cooling of the temperature of the products themselves.

2. Kiln according to claim 1, wherein the first channel (2) is in upper position and comprises the heating zone (10) and the direct cooling area (13), and wherein the second channel (3) is located in lower position and comprises the slow/final cooling area (15).

3. Kiln according to claim 1, wherein the first channel (2) is located in upper position and comprises the slow/final cooling area (15), and wherein the second channel (3) is located in lower position and comprises the heating zone (10) and the direct cooling area (13).

4. Kiln according to any one of the preceding claims, comprising exchange means (7) that allow the heat exchange between the cold air contained in said exchange means (7) and the hot air present in said slow/final cooling area (15), and comprising conveying means (8) which transfer the hot air from said exchange means (7) to said burners (6) associated with said heating zone (10), to raise the combustion temperature of the burners (6) and to obtain energy savings and emissions reduction.

5. Kiln according to the preceding claim, wherein said exchange means (7) comprise closed pipes placed at the top of the channel (2; 3), wherein the slow/final cooling area (15) is located, and ventilation means, said pipes being internally crossed by a flow of cold air blown by the ventilation means, said cold air flow, having been heated in the channel within which the slow/final cooling area is located, is then transferred via the conveying means (8) to the burners (6) as comburent air supply required for combustion.

6. Kiln according to any one of the preceding claims, wherein said channels (2, 3) are defined between at least one lower wall or bottom (17), at least one lateral wall (18), at least one upper wall or vault (19), and at least one intermediate partition vault (20), one inlet (9) of said heating zone (10) and one outlet (16) of said slow/final cooling area (15), said inlet and said outlet being arranged on the same side of the kiln, respectively.

7. Kiln according to any one of the preceding claims, wherein said feeding members (4, 5) are suitable for conveying the ceramic products along said first channel (2) in a first feeding direction and along said second channel (3) in a second feeding direction, and wherein said first feeding direction is opposite to the second feeding direction.

8. Kiln according to any one of the preceding claims, wherein said feeding members (4, 5) comprise motor driven roller conveyors.

9. Kiln according to any one of the preceding claims, wherein said heating zone (10) comprises a first preheating area (11) followed by a second firing area (12).

10. Kiln according to any one of the preceding claims, wherein said lifting means (14) are contained in a closed box (21), and allow for loading and transferring said products from said direct cooling area (13) to said slow/final cooling area (15).

11. Kiln according to the preceding claim, wherein said closed box (21) is insulated, thus allowing temperature to be maintained at a value close to that of the ceramic products in the direct cooling area (13).

12. Kiln according to any one of the preceding claims, comprising at least one section of roller conveyor (23), located in the channel (2; 3) containing the heating zone (10), and at least one section of roller conveyor (23), located in the channel (3; 2) containing the slow/final cooling area (15), said sections of roller conveyor (23) being provided with variable speed motor means to allow for the acceleration and the spacing of the ceramic products to and from the lifting means (14).

13. Kiln according to the preceding claim, wherein said sections of roller conveyor (23) allow for spacing of the first row (24) of the products from the next row (25) of the products themselves to and from the lifting means (14), so as to allow said lifting means (14) to transfer said first row (24) of ceramic products from the first channel (2) to the second channel (3) and to return to the transfer position.

14. Kiln according to any one of the preceding claims, comprising roller unloading means (22) for unloading the ceramic products in case of malfunction of the lifting means (14), and useable for emergencies.

## Patentansprüche

1. Brennofen (1) für keramische Produkte und dergleichen, umfassend mindestens eine erste Heizzone (10) der keramischen Produkte, mindestens einen direkten Kühlbereich (13) und mindestens einen langsamen/abschließenden Kühlbereich (15), der zwischen den Wänden des Ofens selbst (1) definiert ist, Produktzuführelemente (4, 5), und Brenner (6) zum Brennen der Produkte selbst, **dadurch gekennzeichnet, dass** er einen ersten Kanal (2) und einen zweiten Kanal (3) umfasst, die übereinander angeordnet sind, worin die besagte Heizzone (10) und der besagte direkte Kühlbereich (13) in einem Kanal enthalten sind und der besagte langsame/abschließende Kühlbereich (15) in dem anderen Kanal enthalten ist, und Hebemittel (14), die den Transfer der keramischen Produkte von dem Kanal, der die Heizzone (10) und den direkten Kühlbereich (13) umfasst, zu dem Kanal, der den langsamen/abschließenden Kühlbereich (15) umfasst, ermöglichen, worin der besagte direkte Kühlbereich (13) einen Satz perforierter Rohre umfasst, die das Kühlen der in dem direkten Kühlbereich (13) vorhandenen keramischen Produkte durch Kaltluftstrahlen, die mit hoher Geschwindigkeit aus den perforierten Rohren austreten, ermöglichen und eine beträchtliche Kühlung der Temperatur der Produkte selbst ermöglichen.

2. Ofen nach Anspruch 1, worin der erste Kanal (2) in oberer Position ist und die Heizzone (10) und den direkten Kühlbereich (13) umfasst und worin der zweite Kanal (3) in unterer Position angeordnet ist und den langsamen/abschließenden Kühlbereich (15) umfasst.

3. Ofen nach Anspruch 1, worin der erste Kanal (2) in oberer Position angeordnet ist und den langsamen/abschließenden Kühlbereich (15) umfasst und worin der zweite Kanal (3) in unterer Position angeordnet ist und die Heizzone (10) und den direkten Kühlbereich (13) umfasst.

4. Ofen nach irgendeinem der vorangegangenen Ansprüche, umfassend Austauschmittel (7), die den Wärmeaustausch zwischen der in den Austauschmitteln (7) enthaltenen Kaltluft und der in dem besagten langsamen/abschließenden Kühlbereich (15) vorhandenen Heißluft ermöglichen, und umfassend Fördermittel (8), die die Warmluft von den besagten Austauschmitteln (7) zu den besagten Brennern (6) übertragen, die der besagten Heizzone (10) zugeordnet sind, um die Verbrennungstemperatur der Brenner (6) zu erhöhen und Energieeinsparungen und Emissionsreduzierungen zu erzielen.

5. Ofen nach dem vorangegangenen Anspruch, worin die besagten Austauschmittel (7) geschlossene Rohre umfassen, die oben auf dem Kanal (2; 3) angeordnet sind, worin der langsame/abschließenden Kühlbereich (15) angeordnet ist, und Belüftungsmittel, wobei die Rohre innen von einem Kaltluftstrom durchquert werden, der von den Belüftungsmitteln geblasen wird, wobei der besagte Kaltluftstrom, der in dem Kanal, in dem der langsame/abschließende Kühlbereich angeordnet ist, erwärmt wurde, dann über die Fördermittel (8) zu den Brennern (6) als für die Verbrennung erforderliche Verbrennungsluftzufuhr übertragen wird.

6. Ofen nach irgendeinem der vorangegangenen Ansprüche, worin die besagten Kanäle (2, 3) zwischen mindestens einer unteren Wand oder einem Boden (17), mindestens einer Seitenwand (18), mindestens einer oberen Wand oder einem Gewölbe (19) und mindestens einem Zwischenwandgewölbe (20), einem Einlass (9) der besagten Heizzone (10) und einem Auslass (16) des besagten langsamen/abschließenden Kühlbereichs (15) definiert sind, wobei der besagte Einlass und der besagte Auslass jeweils auf derselben Seite des Ofens angeordnet sind.

7. Ofen nach irgendeinem der vorangegangenen Ansprüche, worin die Zuführelemente (4, 5) geeignet sind zum Fördern der keramischen Produkte entlang des besagten ersten Kanals (2) in einer ersten Zuführrichtung und entlang des besagten zweiten Kanals (3) in einer zweiten Zuführrichtung und worin die besagte erste Zuführrichtung entgegengesetzt zur besagten zweiten Zuführrichtung ist.

8. Ofen nach irgendeinem der vorangegangenen Ansprüche, worin die besagten Zuführelemente (4, 5) motorisch angetriebene Rollenförderer umfassen.

9. Ofen nach irgendeinem der vorangegangenen Ansprüche, worin die besagte Heizzone (10) einen ersten Vorheizbereich (11), gefolgt von einem zweiten Brennbereich (12) umfasst.

10. Ofen nach irgendeinem der vorangegangenen Ansprüche, worin die besagten Hebemittel (14) in einem geschlossenen Kasten (21) enthalten sind und das Laden und Übertragen der besagten Produkte von dem besagten direkten Kühlbereich (13) zu dem besagten langsamen/abschließenden Kühlbereich (15) ermöglichen.

11. Ofen nach dem vorangegangenen Anspruch, worin der besagte geschlossene Kasten (21) isoliert ist, sodass das Halten der Temperatur auf einem Wert nahe demjenigen der keramischen Produkte im Bereich der direkten Kühlung (13) ermöglicht wird.

12. Ofen nach irgendeinem der vorangegangenen Ansprüche, umfassend mindestens einen Abschnitt des Rollenförderers (23), der in dem Kanal (2; 3) angeordnet ist, der die Heizzone (10) enthält, und mindestens einen Abschnitt des Rollenförderers (23), der in dem Kanal (3; 2) angeordnet ist, der den langsamen/abschließenden Kühlbereich (15) enthält, wobei die besagten Abschnitte des Rollenförderers (23) mit Motormitteln mit variabler Drehzahl versehen sind, um die Beschleunigung und die Beabstandung der keramischen Produkte zu und von den Hebemitteln (14) zu ermöglichen.

13. Ofen nach dem vorangegangenen Anspruch, worin die besagten Abschnitte des Rollenförderer (23) die Beabstandung der ersten Reihe (24) der Produkte von der nächsten Reihe (25) der Produkte selbst zu und von den Hebemitteln (14) ermöglichen, sodass es den besagten Hebemitteln (14) ermöglicht wird, die besagte erste Reihe (24) der keramischen Produkte von dem ersten Kanal (2) zu dem zweiten Kanal (3) zu übertragen und zur Übergabeposition zurückzukehren.

14. Ofen nach irgendeinem der vorangegangenen Ansprüche, umfassend Rollenentlademittel (22) zum Entladen der keramischen Produkte im Fall einer Funktionsstörung der Hebemittel (14) und verwendbar für Notfälle.

## Revendications

1. Four de cuisson (1) pour produits céramiques et analogues comprenant au moins une première zone de chauffage (10) des produits céramiques, au moins une zone de refroidissement direct (13) et au moins une zone de refroidissement lent/final (15), définie entre les parois du four (1) lui-même, des éléments d'alimentation de produit (4, 5), et des brûleurs (6) pour la cuisson des produits eux-mêmes, **caractérisé en ce qu'**il comprend un premier canal (2) et un deuxième canal (3) superposés l'un à l'autre, dans lequel ladite zone de chauffage (10) et ladite zone de refroidissement direct (13) sont comprises dans un canal et ladite zone de refroidissement lent/final (15) est comprise dans l'autre canal, et des moyens de levage (14) qui permettent le transfert des produits céramiques du canal comprenant la zone de chauffage (10) et la zone de refroidissement direct (13) au canal comprenant la zone de refroidissement lent/final (15), dans lequel ladite zone de refroidissement direct (13) comprend un ensemble de tuyaux perforés qui permettent le refroidissement des produits céramiques présents dans ladite zone de refroidissement direct (13) grâce à des jets d'air froid sortant à grande vitesse desdits tuyaux perforés, et permettent un refroidissement considérable de la température desdits produits.

2. Four selon la revendication 1, dans lequel le premier canal (2) est en position supérieure et comprend la zone de chauffage (10) et la zone de refroidissement direct (13), et dans lequel le deuxième canal (3) est situé en position inférieure et comprend la zone de refroidissement lent/final (15).

3. Four selon la revendication 1, dans lequel le premier canal (2) est situé en position supérieure et comprend la zone de refroidissement lent/final (15), et dans lequel le deuxième canal (3) est situé dans une position inférieure et comprend la zone de chauffage (10) et la zone de refroidissement direct (13).

4. Four selon l'une quelconque des revendications précédentes, comprenant des moyens d'échange (7) permettant l'échange de chaleur entre l'air froid contenu dans lesdits moyens d'échange (7) et l'air chaud présent dans ladite zone de refroidissement lent/final (15), et comprenant des moyens de transport (8) qui transfèrent l'air chaud desdits moyens d'échange (7) auxdits brûleurs (6) associés à ladite zone de chauffage (10), pour élever la température de combustion des brûleurs (6) et pour obtenir des économies d'énergie et une réduction des émissions.

5. Four selon la revendication précédente, dans lequel lesdits moyens d'échange (7) comprennent des tuyaux fermés placés au sommet du canal (2 ; 3), dans lequel la zone de refroidissement lent/final (15) est située, et des moyens de ventilation, lesdits tuyaux étant traversés intérieurement par un flux d'air froid soufflé par les moyens de ventilation, ledit flux d'air froid ayant été chauffé dans le canal dans lequel la zone de refroidissement lent/final est située, puis est transféré par les moyens de transport (8) aux brûleurs (6) comme une alimentation d'air comburant nécessaire pour la combustion.

6. Four selon l'une quelconque des revendications précédentes, dans lequel lesdits canaux (2, 3) sont définis entre au moins une paroi inférieure ou fond (17), au moins une paroi latérale (18), au moins une paroi supérieure ou voûte (19), et au moins une voûte de séparation intermédiaire (20), une entrée (9) de ladite zone de chauffage (10) et une sortie (16) de ladite zone de refroidissement lent/final (15), ladite entrée et ladite sortie étant agencées sur le même côté du four, respectivement.

7. Four selon l'une quelconque des revendications précédentes, dans lequel lesdits éléments d'alimentation (4, 5) sont adaptés pour transporter les produits céramiques le long dudit premier canal (2) dans une première direction d'alimentation et le long dudit deuxième canal (3) dans une deuxième direction d'alimentation, et dans lequel ladite première direction d'alimentation est opposée à la deuxième direction d'alimentation.

8. Four selon l'une quelconque des revendications précédentes, dans lequel lesdits éléments d'alimentation (4, 5) comprennent des transporteurs à rouleaux motorisés.

9. Four selon l'une quelconque des revendications précédentes, dans lequel ladite zone de chauffage (10) comprend une première zone de préchauffage (11) suivie d'une deuxième zone de cuisson (12).

10. Four selon l'une quelconque des revendications précédentes, dans lequel lesdits moyens de levage (14) sont contenus dans un boîtier fermé (21), et permettent le chargement et le transfert desdits produits de ladite zone de refroidissement direct (13) à ladite zone de refroidissement lent/final (15).

11. Four selon la revendication précédente, dans lequel ledit boîtier fermé (21) est isolé, permettant ainsi de maintenir la température à une valeur proche de celle des produits céramiques dans la zone de refroidissement direct (13).

12. Four selon l'une quelconque des revendications précédentes, comprenant au moins une section de transporteur à rouleaux (23), située dans le canal (2 ; 3) contenant la zone de chauffage (10), et au moins une section de transporteur à rouleaux (23), située dans le canal (3 ; 2) contenant la zone de refroidissement lent/final (15), lesdites sections de transporteur à rouleaux (23) étant dotées de moyens motorisés à vitesse variable pour permettre l'accélération et l'espacement des produits céramiques vers et depuis les moyens de levage (14).

13. Four selon la revendication précédente, dans lequel lesdites sections de transporteur à rouleaux (23) permettent l'espacement de la première rangée (24) des produits de la rangée suivante (25) des produits eux-mêmes vers et depuis les moyens de levage (14), de façon à permettre auxdits moyens de levage (14) de transférer ladite première rangée (24) de produits céramiques du premier canal (2) au deuxième canal (3) et de revenir à la position de transfert.

14. Four selon l'une quelconque des revendications précédentes, comprenant des moyens de déchargement à rouleaux (22) pour décharger les produits céramiques en cas de dysfonctionnement des moyens de levage (14), et utilisables en cas d'urgence.
